# EUROPÄISCHE PATENTSCHRIFT

(11) **EP 3 713 846 B1**
(45) Veröffentlichungstag und Bekanntmachung des Hinweises auf die Patenterteilung: **31.12.2025**
(21) Anmeldenummer: 18807313.4
(22) Anmeldetag: 21.11.2018
(51) Int. Cl.: B65D 1/34, A47B 87/02, B65D 19/00, B65G 1/04

(54) **TABLAR FÜR EINEN LAGERLIFT**
TRAY FOR A STORAGE LIFT
PLATEAU POUR UN ASCENSEUR DE STOCKAGE

(30) Priorität: 24.11.2017 DE 102017221099
(43) Veröffentlichungstag der Anmeldung: 30.09.2020
(60) Teilanmeldung: 25194069.8
(73) Patentinhaber: Kardex Produktion Deutschland GmbH, 86476 Neuburg/Kammel (DE)
(72) Erfinder: BOUCHÉ, Norbert, 76829 Landau (DE); JAMIN, Dennis, 76185 Karlsruhe (DE)
(86) Internationale Anmeldenummer: PCT/EP2018/082034
(87) Internationale Veröffentlichungsnummer: WO 2019/101780

(56) Entgegenhaltungen:
- DE-U1- 8 326 738
- US-A- 3 023 910
- US-A- 4 899 925
- US-A1- 2003 205 495
- US-A1- 2010 101 685

## Beschreibung

Die Erfindung betrifft ein Tablar für einen Lagerlift, mit einem Boden zum Abstellen von Lagergut, wobei der Boden an wenigstens einer von wenigstens einem Randbereich beabstandeten Stelle plastisch verformt ist. Die Erfindung betrifft darüber hinaus ein Verfahren zur Herstellung eines Tablars aus einem blechförmigen Werkstoff.

Tablare für Lagerlifte sind bekannt. Sie dienen zum Lagern von Lagergut in einem Lagerlift und sind in der Regel in einem solchen beweglich aufgenommen. Für Tablare gibt es eine Reihe von Anforderungen. Zum einen müssen sie ausreichend Tragfähigkeit für das aufzunehmende Lagergut besitzen. Darüber hinaus ist es von Vorteil, wenn Tablare insbesondere in einer vertikalen Richtung, also senkrecht zum Boden, wenig Bauraum einnehmen, so dass eine Vielzahl von Tablaren übereinander in einem Lagerlift vorgegebener Größe untergebracht werden kann.

Aus der DE 83 26 738 U1 ist ein Lager- bzw. Transportkasten für Regallager mit automatischen Beschickungs- und Entnahmevorrichtungen bekannt. Der Kasten ist aus einem Rahmen gebildet, in den ein Sickenblech als Boden eingesetzt ist. Aus der US 3 023 910 A sind Schubläden bekannt, welche monolithisch aus einem Kunststoff gebildet sind. In der US 2010/101685 A1 ist ein Herstellungsverfahren für Holzschalen beschrieben. Die Schalen werden durch Pressen von Sperrholz hergestellt, wobei im Boden ein erhöhter Bereich gebildet wird.

Es ist daher die Aufgabe der Erfindung, ein Tablar für einen Lagerlift und ein Verfahren zum Herstellen eines solchen Tablars bereitzustellen, welches eine hohe Tragfähigkeit und gleichzeitig eine kompakte Bauweise aufweist. Darüber hinaus ist es von Vorteil, wenn das Tablar einfach aufgebaut ist, bzw. mit einer möglichst geringen Zahl von Herstellungsschritten herstellbar ist.

Für ein Tablar der eingangs genannten Art ist diese Aufgabe dadurch gelöst, der Boden in einem unbelasteten Zustand nach oben gewölbt ist und der gewölbte Boden an der wenigstens einen plastisch verformten Stelle einen Versatz nach oben mit einer Höhe aufweist, die mindestens das 0,4-fache, und höchstens das 0,7-fache einer Stärke des Bodens beträgt. Für das eingangs genannte Verfahren ist die Aufgabe dadurch gelöst, dass ein erfindungsgemäßes Tablar aus einem blechförmigen Werkstoff, insbesondere aus einem Blech, durch Umformung hergestellt wird, wobei ein Boden des Tablars an wenigstens einer von wenigstens einem Randbereich beabstandeten Stelle plastisch verformt wird.

Die wenigstens eine plastisch verformte Stelle kann zu einer Spannung des Materials des Bodens, insbesondere des blechförmigen Werkstoffs, führen. Diese Spannung kann wiederum eine Wölbung des Bodens nach oben erzeugen, wobei die Wölbung nach oben in Bezug auf ein vergleichbares Tablar ohne die wenigstens eine plastisch verformte Stelle bezogen ist. Mit anderen Worten kann der Boden des Tablars, der ohne die wenigstens eine plastisch verformte Stelle durch sein Eigengewicht nach unten durchhängen würde, durch die wenigstens eine plastisch verformte Stelle weniger stark durchhängen, oder, statt nach unten durchzuhängen, horizontal verlaufen oder nach oben gewölbt sein. Das Einbringen wenigstens einer plastisch verformten Stelle führt also zu einer negativen Vorspannung im Boden, bzw. zu einem Wölben des Bodens nach oben, im Vergleich zu einem Tablar ohne die erfindungsgemäße wenigstens eine plastisch verformte Stelle.

Diese indirekte Ausbildung der Wölbung kann vermutlich dadurch erzeugt werden, dass an der wenigstens einen plastisch verformten Stelle Material des Bodens seitlich, also von der wenigstens einen plastisch verformten Stelle weg, verdrängt wird. Diese Verdrängung von Material kann zu einem, insbesondere seitlich gerichteten, Druck im Boden des Tablars führen. Da das Tablar in der Regel zu seinen Seiten hin begrenzt ist und diese Seiten versteift sein können, kann der Boden auf den durch die plastische Verformung erzeugten Druck mit Ausbildung der Wölbung reagieren.

Durch die nach oben gerichtete Wölbung des Bodens ist das Tablar im unbelasteten Zustand, also ohne Lagergut, negativ vorgeformt, bzw. negativ vorgespannt. Wird das Tablar nun beladen und steigt die auf den Boden wirkende Belastung, so wölbt sich der Boden nach unten. Durch die negative Verformung nach oben wird der Boden weniger nach unten durchgewölbt als dies bei einem vergleichbaren Tablar der Fall wäre, dessen Boden keine erfindungsgemäße plastisch verformte Stelle aufweist. Mit anderen Worten muss der Boden bei einer Belastung durch Lagergut zunächst die nach oben gerichtete Wölbung überwinden, bevor er sich durch das Gewicht des Lagerguts nach unten wölbt. Dadurch kann eine nach unten gerichtete Wölbung des Bodens minimiert werden. Im Vergleich zu einem Tablar ohne die erfindungsgemäße plastisch verformte Stelle wird der Boden des erfindungsgemäßen Tablars bei gleicher Belastung also weniger stark nach unten durchgewölbt. Auf diese Weise können mehrere Tablare mit geringem vertikalen Abstand übereinander in einem Lagerlift untergebracht werden. Da die nach unten gerichtete Durchwölbung im Vergleich zu einem herkömmlichen Tablar verringert ist, kann das erfindungsgemäße Tablar bei gleichen Platzerfordernissen also eine höhere Traglast aufnehmen.

Der Begriff "Boden des Tablars" bezieht sich auf eine horizontale bevorzugt durchgängige Struktur, die einen Aufnahmebereich für Lagergut des Tablars nach unten hin begrenzt. Das Lagergut liegt dabei zumindest abschnittsweise auf einer Bodenfläche, welche von oben her zugänglich ist, auf. Bei dem erfindungsgemäßen Verfahren ist mit "Boden" der Bereich des blechförmigen Werkstoffs, insbesondere des Blechs, gemeint, welcher später den Boden des Tablars bilden wird. Die wenigstens eine erfindungsgemäße plastisch verformte Stelle ist von der oben beschriebenen, durch die erfindungsgemäße plastisch verformte Stelle erzeugte Verformung des Tablarbodens zu unterscheiden. Während die wenigstens eine erfindungsgemäße plastisch verformte Stelle lokal im Tablarboden, insbesondere bezogen auf die Flächenausdehnung, begrenzt ist, bezieht sich der Bereich der negativen Vorspannung oder der Wölbung nach oben auf flächenmäßig größere Bereiche des Bodens, je nach Ausgestaltung kann dieser Bereich auch den Großteil des Bodens ausmachen. Für den Begriff "blechförmiger Werkstoff" wird im Folgenden der Kürze halber der Begriff "Blech" verwendet. Das Tablar, insbesondere der Boden, kann aus einem Blech geformt sein. Alternativ oder zusätzlich kann das Tablar auch aus einer Mehrzahl von Blechen gebildet sein. Ebenso ist nicht ausgeschlossen, dass ein fertiges Tablar weitere Teile aufweist, so dass es aus mehreren Einzelteilen zusammengesetzt ist. Beispielsweise kann das Tablar auch mit angebrachten Eckauflagen versehen sein.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen. Dabei sind die Ausgestaltungen des erfindungsgemäßen Tablars mit dem erfindungsgemäßen Verfahren zur Herstellung eines Tablars herstellbar. Mit anderen Worten gelten die in Bezug auf das erfindungsgemäße Tablar beschriebenen Vorteile auch für die mit Hilfe des Verfahrens hergestellten Tablare. Ebenso lassen sich die mit Bezug auf das Verfahren beschriebenen Vorteile auf das erfindungsgemäße Tablar übertragen.

An der wenigstens einen plastisch verformten Stelle kann der gewölbte Boden einen Versatz nach oben aufweisen. Mit anderen Worten kann der gewölbte Boden an der wenigstens einen plastisch verformten Stelle zumindest abschnittsweise nach oben versetzt sein. Durch den Versatz des Bodens nach oben kann die Tendenz verstärkt werden, dass die durch die wenigstens eine plastisch verformte Stelle erzeugte Vorformung bzw. Vorspannung negativ ist, oder, mit anderen Worten, dass sich die Wölbung des Bodens nach oben hin ausrichtet. Der Versatz ist bevorzugt durch die wenigstens eine plastisch verformte Stelle lokal begrenzt. Mit anderen Worten erstreckt sich eine Wölbung des Bodens in der Regel über einen größeren Anteil der Bodenfläche des Tablars als der Versatz.

Wie oben beschrieben, kann die negative Vorspannung des Bodens durch das Einbringen einer plastischen Verformung an wenigstens einer Stelle im Boden, also indirekt, erzeugt werden. Die wenigstens eine plastisch verformte Stelle hat dabei bevorzugt eine geringere Ausdehnung über die Bodenfläche als der Bereich der negativen Vorspannung bzw. der Wölbung. Es ist außerdem zu erwähnen, dass sich der Bereich der negativen Vorspannung, bzw. der Wölbung des Bodens, bevorzugt über wenigstens 2/3 der Bodenfläche, besonders bevorzugt über die gesamte Bodenfläche erstreckt. Die wenigstens eine plastisch verformte Stelle erstreckt sich dagegen bevorzugt über weniger als 1/10 der Bodenfläche.

Bevorzugt ist das Tablar, insbesondere dessen Boden, im Wesentlichen rechteckig. Die Rechteckform besitzt dabei Schmalseiten und quer zu diesen verlaufende Längsseiten. Dabei verlaufen die Längsseiten parallel zu einer Längsrichtung des Tablars und die Schmalseiten parallel zu einer Tiefenrichtung des Tablars. Bevorzugt wird mehr Material in Längsrichtung des Tablars verdrängt als in der Tiefenrichtung. Dies kann die Tendenz zur Erzeugung der negativen Vorspannung bzw. der Wölbung nach oben verstärken.

Um wirksam eine negative Vorspannung im Boden zu erzeugen, kann die wenigstens eine plastisch verformte Stelle durch eine längliche Vertiefung gebildet sein. Die längliche Vertiefung kann beispielsweise eine Sicke sein. Dabei ist durch die wenigstens eine längliche Vertiefung bevorzugt ein Versatz des Bodens nach oben gebildet.

Gemäß einer weiteren vorteilhaften Ausgestaltung kann der Boden mit einer Mehrzahl von voneinander beabstandeten länglichen Vertiefungen versehen sein. Die wenigstens eine längliche Vertiefung erstreckt sich mit seiner Längsrichtung bevorzugt parallel zum Boden. Bevorzugt verläuft die wenigstens eine längliche Vertiefung quer zu wenigstens einem Rand des Tablars.

Das Tablar kann im Wesentlichen länglich sein und eine Längsrichtung der wenigstens einen länglichen Vertiefung im Wesentlichen quer zu einer Längsrichtung des Tablars verlaufen. Dadurch wird mehr Material in Längsrichtung des Tablars als quer dazu verdrängt, so dass die wenigstens eine längliche Vertiefung zur Wölbung des Bodens beitragen kann.

Alternativ zur Ausrichtung quer zur Längsrichtung des Tablars kann die wenigstens eine längliche Vertiefung auch eine andere Ausrichtung aufweisen. Insbesondere kann die wenigstens eine längliche Vertiefung diagonal verlaufen, d.h. mit einem Richtungsanteil quer zur Längsrichtung des Tablars und mit einem Richtungsanteil parallel zur Längsrichtung. Ebenso kann es möglich sein, dass das Tablar mit einer Mehrzahl von länglichen Vertiefungen versehen ist, welche unterschiedliche Ausrichtungen aufweisen. Bevorzugt weist das Tablar eine Mehrzahl von parallel zueinander verlaufenden länglichen Vertiefungen auf. Diese können insbesondere gruppenweise parallel zueinander verlaufen, oder, mit anderen Worten, Gruppen von miteinander parallel verlaufenden Vertiefungen bilden.

Gemäß einer bevorzugten Ausgestaltung erstreckt sich die wenigstens eine längliche Vertiefung durchgängig entlang ihrer Längsachse. Alternativ dazu kann die wenigstens eine längliche Vertiefung jedoch auch an wenigstens einer Stelle unterbrochen sein. Ebenso ist es möglich, eine Reihe von Vertiefungen, welche nicht zwingend länglich sein müssen, entlang einer Längsachse aneinanderzureihen.

Die wenigstens eine längliche Vertiefung, vorzugsweise alle längliche Vertiefungen, sofern mehrere vorhanden sind, weist bevorzugt eine Länge auf, welche größer als 1/3, besonders bevorzugt größer als 2/3 einer Tablartiefe beträgt. Dadurch kann wirksam die Wölbung des Bodens verursacht werden. Die Tablartiefe bezieht sich dabei auf die Tiefe des Tablarbodens, also der nutzbaren Fläche.

Ist durch die wenigstens eine plastisch verformte Stelle ein Versatz gebildet, so weist dieser Versatz bevorzugt wenigstens eine Höhe auf, die höchstens der Stärke des Bodens entspricht. Mit der Stärke des Bodens ist dabei insbesondere die Dicke eines Blechs bzw. des blechförmigen Werkstoffs gemeint, aus dem der Boden gebildet ist. Die Höhe des Versatzes wird dabei in Bezug auf die Bodenfläche bestimmt. Die bevorzugte maximale Höhe des Versatzes gilt vorzugsweise auch für den Fall, dass die wenigstens eine plastisch verformte Stelle durch eine längliche Vertiefung in Form einer Sicke gebildet ist. Diese für typische Sicken vergleichsweise niedrige Sickenhöhe kann ausreichend sein, um die Tragfähigkeit des Tablars zu erhöhen, da die durch die Sicken verursachte plastische Verformung des Bodens bereits ausreicht, um die negative Vorspannung bzw. die Wölbung des Bodens nach oben zu erzeugen. Die niedrige Höhe des Versatzes, insbesondere einer Sicke, ist vorteilhaft, um das Volumen des über dem Boden befindlichen Aufnahmebereichs für Lagergut nicht unnötig stark einzuschränken. Darüber hinaus ist die niedrige Höhe des Versatzes bei der Herstellung des Tablars von Vorteil. Insbesondere dann, wenn der wenigstens eine Versatz eingebracht wird, bevor seitliche Kanten des Tablars durch Umkantung geformt werden, wird durch die geringe Höhe des Versatzes vermieden, dass sich das Blech durch das Einbringen des Versatzes so stark verzieht, dass eine weitere Bearbeitung erschwert wird.

Der wenigstens eine Versatz weist eine Höhe auf, die mindestens das 0,4-fache, und höchstens das 0,7-fache der Stärke des Bodens beträgt. Ein guter Kompromiss, der eine ausreichende Wölbung des Bodens hervorruft und gleichzeitig fertigungstechnisch unproblematisch zu sein scheint, kann durch eine Höhe des Versatzes erreicht werden, die in etwa dem 0,55 (± 0,05)-fachen der Stärke des Bodens entspricht. Dies entspricht bei einer Blechdicke von 2 mm einer Höhe des Versatzes von 1,1 ± 0,1 mm.

Wenigstens eine der länglichen Vertiefungen, vorzugsweise alle sofern mehrere vorhanden sind, können einen trapezförmigen Querschnitt aufweisen. Der Querschnitt ist dabei quer zur Längsrichtung der länglichen Vertiefung gesehen. Der trapezförmige Querschnitt kann dabei wie bei einem Trapezblech gebildet sein, d.h., gleichschenklig, symmetrisch und mit der kurzen Grundseite des Trapezes nach oben, also in den Aufnahmebereich hinein, versetzt. Ein solcher Querschnitt kann zum einen vorteilhaft sein, um die Wölbung des Bodens zu erzeugen. Zum anderen lässt sich eine längliche Vertiefung mit einem solchen Querschnitt, insbesondere eine Sicke, einfach herstellen. Fertigungsbedingt kann der zuvor beschriebene trapezförmige Querschnittabgerundet sein. Das heißt, die Übergänge zwischen dem übrigen Boden und den Schenkeln und die Übergänge von den Schenkeln zu der kurzen Grundseite weisen dann keine scharfen Übergänge auf, sondern gehen gerundet ineinander über. Auch können die Schenkel und die kurze Grundseite selbst fertigungsbeding vom geradlinigen Verlauf abweichen und gerundet sein.

Alternativ dazu kann die wenigstens eine längliche Vertiefung einen halbrunden Querschnitt aufweisen, wobei die konvexe Seite in den Aufnahmebereich, also nach oben hin gewölbt bzw. versetzt ist. Andere Querschnittsformen sind ebenfalls möglich, insbesondere solche, wie sie für Sicken bekannt sind. Lediglich beispielhaft seien hier ein kastenförmiger und ein dreieckiger Querschnitt genannt. Darüber hinaus ist es auch möglich, dass nicht alle länglichen Vertiefungen mit gleichen Querschnitten versehen sind.

Gemäß einer vorteilhaften Ausführungsform weist das Tablar eine Vielzahl von länglichen Vertiefungen auf, welche äquidistant über das Tablar verteilt sind. Dabei sind die länglichen Vertiefungen bevorzugt mit ihren Längsrichtungen parallel zueinander und quer zu den Längsrichtungen im gleichen Abstand voneinander angeordnet. Darüber hinaus fluchten die länglichen Vertiefungen bevorzugt miteinander. Mit anderen Worten können die auf die Längsrichtungen der länglichen Vertiefungen bezogenen Enden derselben jeweils entlang einer parallel zur Längsrichtung des Tablars verlaufenden Linie angeordnet sein.

Alternativ zur äquidistanten Anordnung der länglichen Vertiefungen können diese auch eine andere Verteilung aufweisen. Beispielsweise können Abstände zwischen zwei benachbarten länglichen Vertiefungen von den Schmalseiten des Tablars zu einer Mitte des Tablars hin abnehmen. Dabei kann der Abstand zwischen den beiden äußersten benachbarten länglichen Vertiefungen, welche einer Schmalseite am nächsten sind, mehr als doppelt so groß sein wie der Abstand zweier innerer länglicher Vertiefungen im Bereich der Mitte des Tablars.

Bevorzugt sind die länglichen Vertiefungen symmetrisch über das Tablar verteilt. Insbesondere können die länglichen Vertiefungen spiegelsymmetrisch bezüglich einer durch die Mitte des Tablars und quer zu dessen Längsrichtung verlaufenden Spiegelebene verteilt sein.

Parallel zu den Schmalseiten des Tablars sind die länglichen Vertiefungen bevorzugt mittig angeordnet, d.h. bevorzugt weist wenigstens eine längliche Vertiefung zu beiden Längsseiten des Tablars einen im Wesentlichen gleichen Randabstand auf, wobei fertigungstechnische Toleranzen im Bereich von etwa 5 % der Tablartiefe möglich sind.

Um eine ausreichend hohe Stabilität des gesamten Tablars bei der durch die erfindungsgemäße Wölbung erhöhte Tragfähigkeit zu erreichen, ist das Tablar an wenigstens einer Längsseite mit wenigstens einer den Boden begrenzenden Umkantung versehen.

Bevorzugt ist das Tablar als Stanzbiegeteil gebildet. Alternativ oder zusätzlich zum Stanzbiegen können auch andere Umformungstechniken zu Einsatz kommen. Insbesondere Prägen oder Tiefziehen. Bevorzugt ist das Tablar als Stanzbiegeteil mit geprägten und/oder tiefgezogenen Bereichen gebildet. Die wenigstens eine plastisch verformte Stelle, insbesondere die wenigstens eine längliche Vertiefung, ist bevorzugt monolithisch mit dem Boden des Tablars gebildet. Darüber hinaus sind bevorzugt auch die wenigstens eine Umkantung, vorzugsweise alle Umkantungen, monolithisch mit dem Boden des Tablars gebildet. Mit anderen Worten können der Tablarboden, die wenigstens eine plastisch verformte Stelle und/oder die wenigstens eine Umkantung aus einem einzigen Blech durch Umformung hergestellt sein.

Zur Erzeugung der wenigstens einen plastisch verformten Stelle kann insbesondere wenigstens ein Verdrängungskörper von unten in den Boden gedrückt werden. Solch ein Verdrängungskörper kann insbesondere durch einen Stempel oder eine Rolle gebildet sein. Die wenigstens eine plastisch verformte Stelle kann auch durch Tiefziehen und/oder andere geeignete Techniken gebildet werden.

Die erfindungsgemäße Lösung erlaubt es, die Tragfähigkeit eines Tablars ohne zusätzliche Versteifungselemente wie beispielsweise angeschweißte Träger oder Profile zu erhöhen. Es ist jedoch nicht ausgeschlossen, ein erfindungsgemäßes Tablar, auch wenn dieses beispielsweise mit wenigstens einer länglichen Vertiefung versehen ist, mit zusätzlichen Elementen zur Versteifung zu versehen. Lediglich beispielhaft sei hier die Möglichkeit genannt, unter dem Boden wenigstens ein Profil anzubringen, welches parallel oder quer zur Tablarlängsrichtung verläuft. Ein solches Profil kann beispielsweise ein Doppelkanalprofil sein.

Die negative Vorspannung des Bodens, bzw. die Wölbung weist bevorzugt eine Größe von +2 bis -15 mm, bevorzugt -3 bis -6 mm auf. Die Werte <0 bis -15 mm repräsentieren dabei eine Wölbung des Bodens nach oben. Die Werte >0 bis +2 mm eine Durchwölbung nach unten. Wie bereits eingangs erwähnt, profitiert das erfindungsgemäße Tablar auch von einer Wölbung im Bereich von >0 bis 2 mm, sofern ein Tablar ohne die wenigstens eine plastisch verformte Stelle stärker nach unten durchgewölbt ist. Die Größe wird dabei zwischen dem obersten Punkt und dem untersten Punkt der Wölbung beziehungsweise des gewölbten Bodens, jeweils auf der Bodenfläche oder jeweils an der Bodenunterseite, gemessen. Der unterste Punkt der Wölbung kann beispielsweise am Boden in unmittelbarer Nähe zu einer Umkantung liegen. Der oberste Punkt der Wölbung liegt beim Vorhandensein genau einer Wölbung in der Regel in der Mitte des Tablars. Wird das Tablar mit einer zusätzlichen Versteifung, wie etwa einem ein- oder angebrachten Profil versehen, so liegt der oberste Punkt der Wölbung in der Regel in der Mitte der nicht-versteiften Fläche des Bodens.

Im Folgenden ist die Erfindung beispielhaft anhand verschiedener Ausführungsformen mit Bezug auf die Zeichnungen näher erläutert. Die bei den Ausführungsformen beispielhaft dargestellten Merkmalskombinationen können nach Maßgabe der obigen Ausführung entsprechend der für einen bestimmten Anwendungsfall notwendigen Eigenschaften des erfindungsgemäßen Tablars durch weitere Merkmale ergänzt werden. Auch können, ebenfalls nach Maßgabe der obigen Ausführung, einzelne Merkmale bei den beschriebenen Ausführungsformen weggelassen werden, wenn es auf die Wirkung dieses Merkmals in einem konkreten Anwendungsfall nicht ankommt.

In den Zeichnungen werden für Elemente gleicher Funktion und/oder gleichen Aufbaus stets

Es zeigen:
- Fig. 1: eine perspektivische Darstellung einer ersten Ausführungsform eines erfindungsgemäßen Tablars;
- Fig. 2: eine Aufsicht auf das Tablar aus Fig. 1;
- Fig. 3: eine beispielhafte übertriebene Darstellung der Wölbung eines erfindungsgemäßen Tablars in einem Schnitt durch die Tablarmitte;
- Fig. 4: eine perspektivische Darstellung einer zweiten Ausführungsform eines erfindungsgemäßen Tablars;
- Fig. 5: eine Aufsicht auf das Tablar aus Fig. 4;
- Fig. 6: eine Aufsicht auf eine weitere beispielhafte Ausführungsform eines erfindungsgemäßen Tablarbodens;
- Fig. 7: eine Aufsicht auf eine weitere beispielhafte Ausführungsform eines erfindungsgemäßen Tablarbodens;
- Fig. 8: eine perspektivische, geschnittene Darstellung einer vorteilhaften Ausführungsform einer länglichen Vertiefung;
- Fig. 9: einen Querschnitt durch die längliche Vertiefung aus Fig. 8; und
- Fig. 10: einen Querschnitt durch eine weitere vorteilhafte Form einer länglichen Vertiefung.

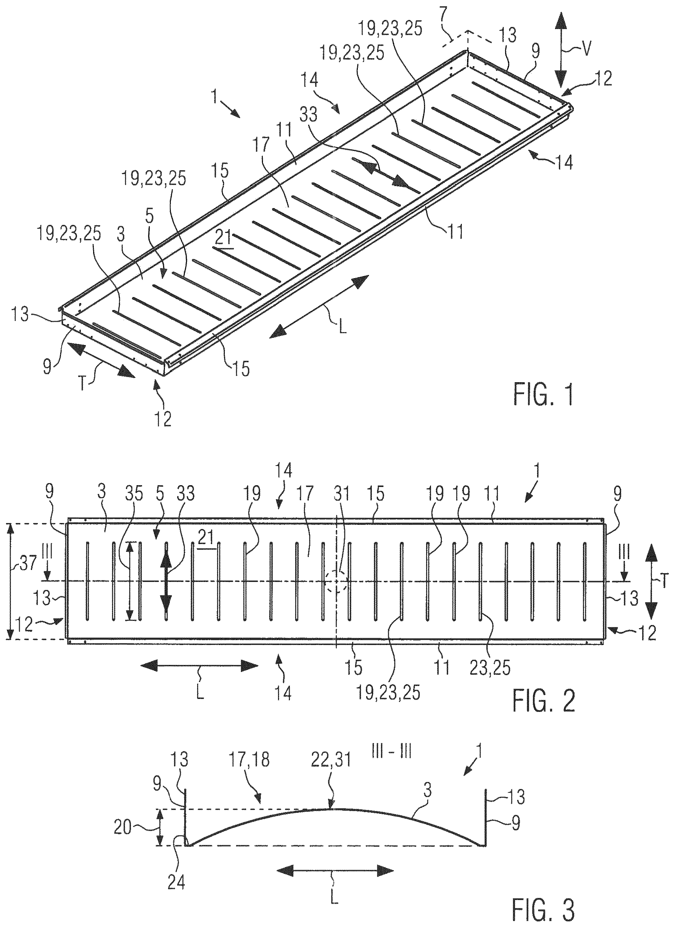

Im Folgenden ist der Aufbau einer ersten vorteilhaften Ausführungsform eines erfindungsgemäßen Tablars 1 mit Bezug auf die Figuren 1 und 2 beschrieben.

Das Tablar 1 dient zur Aufnahme von Lagergut (nicht gezeigt). Dazu besitzt das Tablar 1 einen Boden 3, dessen Bodenfläche 5 von oben her zugänglich ist. Die Bodenfläche 5, auf der das Lagergut abgestellt werden kann, stellt die Oberseite des Bodens 3 dar. Das Volumen, auf dem das Lagergut abgestellt werden kann, ist nach unten durch den Boden 3 begrenzt. Dieses Volumen stellt einen Aufnahmebereich 7 des Tablars 1 dar, welcher in Fig. 1 gestrichelt angedeutet ist.

Das Tablar 1, zumindest der Boden 3, weist, von oben betrachtet eine, im Wesentlichen rechteckige Form auf. Dabei erstrecken sich Schmalseiten 9 des Rechtecks parallel zu einer Tablartiefe bzw. Tiefenrichtung T. Längsseiten 11 der Rechteckform verlaufen quer zu den Schmalseiten 9 und erstrecken sich parallel zu einer Längsrichtung L des Tablars. Da das Tablar 1 in der Regel an wenigstens einer Längsseite 11 zugänglich ist, ist die Längsrichtung L gleichbedeutend mit einer Breitenrichtung des Tablars. Senkrecht zu der Längsrichtung L und zu der Tiefenrichtung T erstreckt sich die Vertikalrichtung V des Tablars, entlang der sich das Tablar 1 in seiner Höhe erstreckt.

An den Schmalseiten 9 weist das Tablar 1 die Umkantungen 13 und an den Längsseiten 11 die Umkantungen 15 auf. Die Umkantungen 13 und 15 dienen zum einen dazu, den Boden 3 bzw. die Bodenfläche 5 quer zur Vertikalrichtung V zu begrenzen. Zum anderen nehmen die Umkantungen 13 und 15 Kräfte auf, die durch den Boden 3 in sie hineingeleitet werden. Die Struktur des Tablars 1 wird dadurch versteift. Letztendlich können die Umkantungen 13 und/oder 15 auch dazu dienen, das Tablar 1 aufzuhängen oder daran zu befördern. Die Schmalseiten 9 und Längsseiten 11 sind in der Regel aus Randbereichen 12 und 14 eines Blechs 21 gebildet, aus dem das Tablar 1 geformt ist. Die Randbereiche 12 liegen dabei an den Schmalseiten 9 und die Randbereiche 14 an den Längsseiten 11.

Der Boden 3 weist bevorzugt eine Wölbung 17, bzw. eine negative Vorspannung auf. Mit anderen Worten ist der Boden 3 bevorzugt nach oben gewölbt. Die Wölbung 17 in einem unbelasteten Zustand 18 ist in Fig. 3 stark übertrieben dargestellt. Die gestrichelte Linie in Fig. 3 soll zum Vergleich einen ungewölbten Tablarboden darstellen. Die Wölbung 17 erstreckt sich bevorzugt über wenigstens 2/3 des Bodens 3, bzw. der Bodenfläche 5, mehr bevorzugt über den gesamten Boden 3. Die Größe bzw. Höhe 20 der Wölbung 17 ist bevorzugt größer als eine Stärke 41 des Bodens 3 und beträgt bevorzugt zwischen 5 und 15 mm. Die Höhe 20 wird dabei zwischen einem obersten Punkt 22 und einem untersten Punkt 24 der Wölbung 17 gemessen. Da sich die Wölbung 17 bevorzugt über den gesamten Boden 3 des Tablars 1 erstreckt, liegt der oberste Punkt 22 in der Regel im Bereich der Mitte 31 des Tablars 1 beziehungsweise des Bodens 3. Der unterste Punkt 24 liegt in der Regel in der Nähe einer Umkantung 13 oder 15.

Durch die Wölbung 17 des Bodens 3 ist die Tragfähigkeit im Vergleich zu einem Tablar ohne Wölbung erhöht. Wird Lagergut auf die Bodenfläche 5 gestellt, so senkt sich der Boden 3 zunächst, wodurch die Wölbung 17 flacher wird. Bei einem Tablar, welches bereits in einem unbelasteten Zustand nicht gewölbt ist (wie durch die gestrichelte Linie in Fig. 3 angedeutet) würde sich der Boden bei einer gleichen Belastung bereits nach unten durchwölben. Wird der Boden durch die Aufnahme weiteren Lagergutes weiter belastet, so wird sich auch der Boden 3 des erfindungsgemäßen Tablars 1 bei einer ausreichend starken Belastung nach unten wölben. Diese Wölbung nach unten fällt aber entsprechend geringer aus als dies bei einem vergleichbaren Tablar ohne vorherige Wölbung nach oben der Fall wäre. Das erfindungsgemäße Tablar 1 wölbt sich entsprechend bei gleicher Belastung weniger stark nach unten durch als ein Tablar ohne die erfindungsgemäße Wölbung nach oben. Da in Lagerliften eine Vielzahl von Tablaren vertikal übereinander angeordnet sind, kann durch die Verwendung des erfindungsgemäßen Tablars 1 eine höhere Dichte von Tablaren im Lagerlift erreicht werden, da diese entlang der Vertikalrichtung V enger aneinander angeordnet sein können. Bei herkömmlichen Tablaren, die sich stark nach unten durchwölben, muss dagegen ein größerer Freiraum zwischen zwei übereinander angeordneten Tablaren freigehalten werden. Eine Wölbung nach oben ist erfindungsgemäß nicht zwingend erforderlich.

Das Tablar 1 kann auch im unbelasteten Zustand 18 einen horizontal verlaufenden oder sogar nach unten durchgewölbten Boden 3 aufweisen. Dabei ist der Boden 3 jedoch weniger stark nach unten durchgewölbt als er es bei einem vergleichbaren Tablar 1 ohne wenigstens eine plastisch verformte Stelle 19 wäre, auf die im Folgenden eingegangen ist.

Die Wölbung 17 des Bodens 3 kann indirekt erzeugt werden. D.h., auf eine direkte Ausformung der Wölbung 17 selbst durch Umformungsverfahren kann verzichtet werden. Stattdessen ist der Boden 3 an wenigstens einer Stelle 19 plastisch verformt. Bevorzugt weist der Boden 3 eine Mehrzahl solcher plastisch verformten Stellen 19 auf. In den Figuren 1 und 2 sind der Übersichtlichkeit halber nicht alle plastisch verformten Stellen 19 mit einem Bezugszeichen versehen. Die wenigstens eine plastisch verformte Stelle 19 ist von Randbereichen 12 und 14 des Tablars 1 beabstandet.

In den plastisch verformten Stellen 19 wird vermutlich Material des Blechs 21, aus dem der Boden 3 geformt ist, seitlich verdrängt. Dabei wird bevorzugt mehr Material in Längsrichtung L als in Tiefenrichtung T verdrängt. Diese Verdrängung von Material kann zu einer Längung des Bodens 3 in Längsrichtung L führen. Da der Boden 3 durch die Umkantungen 13 und 15 jedoch daran gehindert ist, seine Fläche in Längsrichtung L und/oder in Tiefenrichtung T zu vergrößern, wölbt er sich entlang der Vertikalrichtung V nach oben.

Wenigstens eine der plastisch verformten Stellen 19, bevorzugt alle plastisch verformten Stellen 19, sind monolithisch, also einteilig mit dem Boden 3 aus dem Material des blechförmigen Werkstoffs 21, im Folgenden "Blech 21", gebildet. Bevorzugt werden die plastisch verformten Stellen 19 in das Blech 21 eingebracht, bevor die Umkantungen 13 und 15 geformt werden.

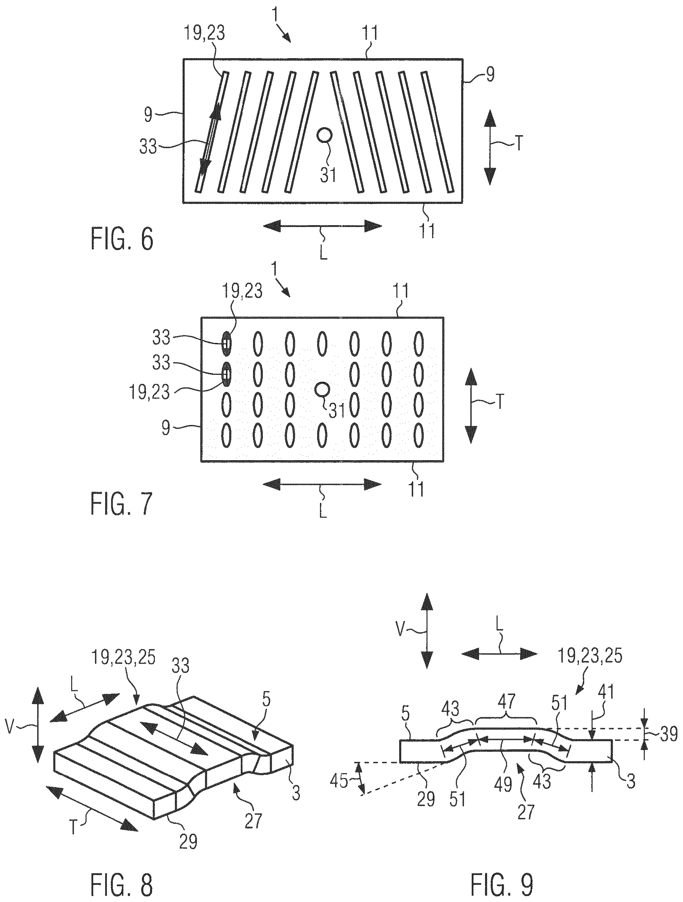

In einer bevorzugten Ausführungsform sind die plastisch verformten Stellen 19 als längliche Vertiefungen 23 gebildet. Die länglichen Vertiefungen 23 stellen dabei bevorzugt Sicken 25 dar. Eine solche längliche Vertiefung 23 bzw. Sicke 25 ist im Detail in den Figuren 8 und 9 dargestellt. Auf diese Figuren soll auch hier Bezug genommen werden.

Jede der plastisch verformten Stellen 19 stellt bevorzugt einen Versatz 27 des Bodens 3 nach oben dar. In diesem Fall bezieht sich der Begriff "Vertiefung" 23 also auf eine Vertiefung 23 an der Unterseite 29, durch die der Boden 3 von der Unterseite 29 nach oben durchgedrückt wird.

Die länglichen Vertiefungen 23 der ersten Ausführungsform verlaufen parallel zueinander und zu den Schmalseiten 9. In Tiefenrichtung T fluchten die länglichen Vertiefungen 23 miteinander, so dass sie alle mit jeweils beiden Enden an parallel zu den Längsseiten 11 verlaufenden gedachten Linien enden. Bevorzugt sind die länglichen Vertiefungen 23 dabei äquidistant angeordnet.

Die Mitte 31 des Tablarbodens 3 ist bevorzugt frei von plastisch verformten Stellen 19. Dabei bezieht sich die Mitte 31 auf die Mitte der Bodenfläche 5 bei einer Betrachtung des Tablarbodens 3 von oben. Dies kann von Vorteil sein, um das Tablar 1 bei seiner Herstellung bzw. das Blech 21 bei seiner Umformung an seiner Mitte 31, beispielsweise mittels eines Drehtellers einer Stanzbiegemaschine, festzuhalten.

Entlang der Tiefenrichtung T sind die länglichen Vertiefungen 23 bevorzugt mittig zwischen den Längsseiten 11 des Tablars 1 angeordnet. D.h., die Abstände zwischen den länglichen Vertiefungen 23 und den Längsseiten 11 bzw. den Umkantungen 15 sind auf beiden Längsseiten 11 im Wesentlichen gleich, wobei fertigungstechnische Toleranzen im Bereich von 5 % möglich sind.

Die länglichen Vertiefungen 23 erstrecken sich entlang Längsrichtungen 33, welche bevorzugt senkrecht zur Längsrichtung L des Tablars 1 verlaufen. Entlang den Längsrichtungen 33 weisen die länglichen Vertiefungen 23 jeweils bevorzugt eine Länge 35 auf, welche mehr als 1/3 ± 10 % der Tiefe 37 des Tablars 1, beträgt. Besonders bevorzugt weisen die länglichen Vertiefungen 23 jeweils bevorzugt eine Länge 35 auf, welche mehr als 1/3 ± 10 % der Tiefe 37 des Tablars 1 beträgt. Die Tiefe 37 des Tablars 1 bezieht sich dabei auf die Tiefe 37 der Bodenfläche 5.

Der Versatz 27 weist bevorzugt eine Höhe 39 auf, welche höchstens so groß ist wie die Stärke 41 des Bodens 3. Die Höhe 39 des Versatzes 27 wird dabei von der Bodenfläche 5 auf dem Versatz 27 in Bezug auf die Bodenfläche 5 in einem nicht nach oben versetzten Bereich gemessen. Die Stärke 41 des Bodens 3 entspricht bevorzugt der Dicke des zur Herstellung des Bodens 3 verwendeten Blechs 21. Besonders bevorzugt entspricht die Höhe 39 des Versatzes 27 dem 0,4 bis 0,7-fachen der Stärke 41. Die Höhe 39 des Versatzes 27 ist also bevorzugt geringer als die Höhe 20 der Wölbung 17.

Für den Fall, dass die wenigstens eine plastisch verformte Stelle 19 durch eine Sicke 25 gebildet ist, entspricht die Höhe 39 des Versatzes 27 der Sickenhöhe. Alternativ dazu kann der wenigstens eine Versatz 27 auch eine Höhe 39 aufweisen, welche größer als die Stärke 41 des Bodens 3 ist.

Gemäß einer vorteilhaften Ausgestaltung, wie sie auch in den Figuren 8 und 9 dargestellt ist, weist die wenigstens eine längliche Vertiefung 23 bzw. die Sicke 25 einen Querschnitt quer zur Längsrichtung 33 der länglichen Vertiefung 23 auf, welcher trapezförmig ist. Mit anderen Worten weist die längliche Vertiefung 23 im Querschnitt zwei zueinander spiegelsymmetrische Schenkel 43 auf, welche in einem Winkel 45 zur unverformten Bodenfläche 5 verlaufen. Der Winkel 45 beträgt bevorzugt zwischen 25° und 35°. Zwischen den beiden Schenkeln 43 erstreckt sich der im Wesentlichen gerade Bereich 47. Der gerade Bereich 47 weist bevorzugt eine sich quer zur Längsrichtung 33 der länglichen Vertiefung 23 erstreckende Länge 49 auf, welche länger ist als die Längen 51 der Schenkel 43. Die längliche Vertiefung 23 weist also insgesamt eine flache Form auf. Der gerade Bereich 47 muss nicht zwingend exakt gerade verlaufen. Er kann auch fertigungstechnisch bedingt eine leichte Wölbung nach oben aufweisen.

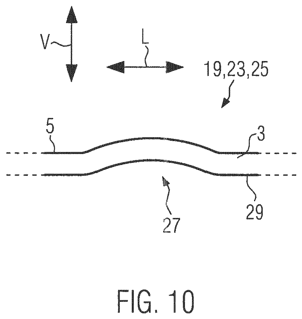

Alternativ oder zusätzlich kann wenigstens eine längliche Vertiefung 23 einen halbrunden Querschnitt aufweisen. Im Falle eines halbrunden Querschnitts wölbt sich die konvexe Seite bevorzugt nach oben in den Aufnahmebereich 7. Ein solcher Querschnitt ist in der Figur 10 dargestellt. Da der trapezförmige Querschnitt aus den Figuren 8 und 9 fertigungstechnisch bedingt nicht zwingend scharfe Übergänge aufweist, können diese auch abgerundet sein, so dass die Querschnittsform insgesamt der halbrunden Form der Figur 10 ähneln kann. Je runder die Übergänge sind, desto stärker nähert sich die Trapezform der halbrunden Form an. Darüber hinaus sind auch andere Querschnitte, insbesondere solche, wie sie für Sicken bekannt sind, möglich.

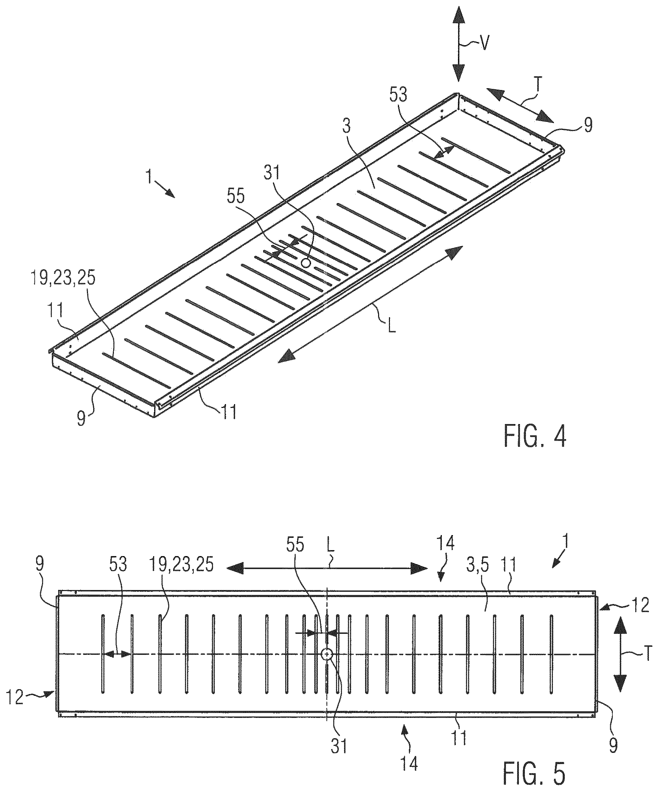

Im Folgenden ist eine weitere vorteilhafte Ausführungsform eines erfindungsgemäßen Tablars 1 mit Bezug auf die Figuren 4 und 5 beschrieben. Der Kürze halber ist dabei nur auf die Unterschiede zu der mit Bezug auf die Figuren 1 und 2 beschriebenen Ausführungsform eingegangen.

Die zweite Ausführungsform des erfindungsgemäßen Tablars 1 unterscheidet sich von der mit Bezug auf die Figuren 1 und 2 beschriebenen ersten Ausführungsform dadurch, dass die länglichen Vertiefungen 23, bzw. die Sicken 25 nicht äquidistant entlang der Längsrichtung L des Tablars 1 verteilt sind. Stattdessen nehmen die Abstände zweier länglicher Vertiefungen 23 von den Schmalseiten 9 zur Tablarmitte 31 hin ab.

Die Verteilung der länglichen Vertiefungen 23 in Längsrichtung L ist dabei bevorzugt spiegelsymmetrisch bezüglich einer durch die Mitte 31 und quer zur Längsrichtung L verlaufenden Spiegelebene. Der Abstand 53 zwischen den beiden äußersten länglichen Vertiefungen 23 ist dabei mehr als doppelt so groß wie der Abstand 55 zwischen den beiden der Mitte 31 am nächsten gelegenen länglichen Vertiefungen 23.

Auf der Höhe der Tablarmitte 31 befindet sich eine längliche Vertiefung 23, welche im Bereich der Mitte 31 unterbrochen ist, um, wie bei der zuvor beschriebenen Ausführungsform, die Mitte 31 selbst freizuhalten, insbesondere für den Drehteller einer Stanzbiegemaschine.

Die Figuren 6 und 7 zeigen lediglich schematisch zwei weitere Beispiele für die Ausprägung von plastisch verformten Stellen 19 des erfindungsgemäßen Tablars 1. Die plastisch verformten Stellen 19 des Tablars 1 in Figur 6 sind als längliche Vertiefungen 23 gebildet, welche wie die zuvor beschriebenen länglichen Vertiefungen 23 ausgebildet sein können.

Im Unterschied zu der mit Bezug auf die Figuren 1 und 2 beschriebenen Ausführungsform verlaufen die Längsrichtungen der länglichen Vertiefungen 23 jedoch nicht parallel zu den Schmalseiten 9 bzw. senkrecht zu den Längsseiten 11. Stattdessen sind die länglichen Vertiefungen 23 schräg angeordnet, wobei sie in einem Winkel von kleiner als 45° zu den Schmalseiten 9 verlaufen. Dabei verlaufen die länglichen Vertiefungen 23 gruppenweise parallel. Auch hier ist die Verteilung der länglichen Vertiefungen 23 bevorzugt symmetrisch mit Bezug auf eine durch die Mitte 31 und quer zur Längsrichtung L verlaufende Spiegelebene.

Lediglich beispielhaft sind die länglichen Vertiefungen 23 auf einer Hälfte des Tablars äquidistant zueinander angeordnet. Alternativ dazu können die Abstände zwischen zwei benachbarten länglichen Vertiefungen 23 auch variieren.

Eine weitere mögliche Ausgestaltung der plastisch verformten Stellen 19 ist in Figur 7 gezeigt. Die Ausgestaltung ähnelt der der ersten mit Bezug auf die Figuren 1 und 2 beschriebenen Ausführungsform.

Im Unterschied zu der ersten Ausführungsform sind die länglichen Vertiefungen 23 jedoch nicht durchgängig gebildet. Stattdessen weist die in Figur 7 gezeigte Ausführungsform Reihen von länglichen Vertiefungen 23 auf, welche sich entlang der Tiefenrichtung T des Tablars 1 aneinandergereiht erstrecken. Dabei weist jede der länglichen Vertiefungen 23 eine Längsrichtung 33 auf, welche bevorzugt ebenfalls parallel zur Tiefenrichtung T verläuft. Mit anderen Worten ähnelt diese Ausgestaltung der der ersten Ausführungsform mit dem Unterschied, dass die länglichen Vertiefungen 23 mehrfach unterbrochen sind.

### Bezugszeichenliste

- 1: Tablar
- 3: Boden
- 5: Bodenfläche
- 7: Aufnahmebereich
- 9: Schmalseite
- 11: Längsseite
- 12: Randbereich
- 13: Umkantung
- 14: Randbereich
- 15: Umkantung
- 17: Wölbung
- 18: Unbelasteter Zustand
- 19: Plastisch verformte Stelle
- 20: Höhe der Wölbung
- 21: Blechförmiger Werkstoff
- 22: Oberster Punkt der Wölbung
- 23: Vertiefung
- 24: Unterster Punkt der Wölbung
- 25: Sicke
- 27: Versatz
- 29: Unterseite des Bodens
- 31: Tablarmitte
- 33: Längsrichtung einer länglichen Vertiefung
- 35: Länge einer länglichen Vertiefung
- 37: Tiefe des Tablars
- 39: Höhe des Versatzes
- 41: Stärke des Bodens
- 43: Schenkel
- 45: Winkel
- 47: Gerader Bereich
- 49: Länge des geraden Bereichs
- 51: Schenkellänge
- 53: Abstand zwischen äußeren länglichen Vertiefungen
- 55: Abstand zwischen inneren länglichen Vertiefungen
- L: Längsrichtung
- T: Tiefenrichtung
- V: Vertikalrichtung

## Patentansprüche

1. Tablar (1) für einen Lagerlift, mit einem Boden (3) zum Abstellen von Lagergut, wobei der Boden (3) an wenigstens einer von wenigstens einem Randbereich (12, 14) beabstandeten Stelle (19) plastisch verformt ist, **dadurch gekennzeichnet, dass** der Boden (3) in einem unbelasteten Zustand (18) nach oben gewölbt ist und der gewölbte Boden (3) an der wenigstens einen plastisch verformten Stelle (19) einen Versatz (27) nach oben mit einer Höhe (39) aufweist, die mindestens das 0,4-fache, und höchstens das 0,7-fache einer Stärke (41) des Bodens beträgt (3).

2. Tablar (1) nach Anspruch 1, **dadurch gekennzeichnet, dass** durch die wenigstens eine plastisch verformte Stelle (19) eine negative Vorspannung im Boden (3) erzeugt ist.

3. Tablar (1) nach Anspruch 1 oder 2, **dadurch gekennzeichnet, dass** die wenigstens eine plastisch verformte Stelle (19) durch eine längliche Vertiefung (23) gebildet ist.

4. Tablar (1) nach Anspruch 3, **dadurch gekennzeichnet, dass** das Tablar (1) im Wesentlichen länglich ist und eine Längsrichtung (33) der wenigstens einen länglichen Vertiefung (23) im Wesentlichen quer zu einer Längsrichtung (L) des Tablars (1) verläuft.

5. Tablar (1) nach Anspruch 3 oder 4, **dadurch gekennzeichnet, dass** die wenigstens eine längliche Vertiefung (23) eine Länge (35) aufweist, die größer als 1/3 einer Tablartiefe (37) ist.

6. Tablar (1) nach einem der Ansprüche 1 bis 5, **dadurch gekennzeichnet, dass** der wenigstens eine Versatz (27) eine Höhe (39) aufweist, die höchstens der Stärke (41) des Bodens (3) entspricht.

7. Tablar (1) nach einem der Ansprüche 1 bis 6, **dadurch gekennzeichnet, dass** das Tablar (1) als Stanzbiegeteil gebildet ist.

8. Tablar (1) nach einem der Ansprüche 1 bis 7, **dadurch gekennzeichnet, dass** die wenigstens eine plastisch verformte Stelle (19) monolithisch mit dem Boden (3) des Tablars (1) gebildet ist.

9. Verfahren zur Herstellung eines Tablars (1) aus einem blechförmigen Werkstoff (21) nach einem der Ansprüche 1 bis 8 durch Umformung, wobei ein Boden (3) des Tablars (1) an wenigstens einer von wenigstens einem Randbereich (12, 14) beabstandeten Stelle (19) plastisch verformt wird.

10. Verfahren nach Anspruch 9, wobei durch die wenigstens eine plastisch verformt Stelle (19) eine nach oben gerichtete Wölbung (17) des Bodens (3) erzeugt wird.

11. Verfahren nach Anspruch 9 oder 10, wobei an der wenigstens einen plastisch verformten Stelle (19) Material des Bodens (3) von der wenigstens einen verformten Stelle (19) weg verdrängt wird.

12. Verfahren nach einem der Ansprüche 9 bis 11, wobei an der wenigstens einen Stelle (19) wenigstens ein Verdrängungskörper von unten in den Boden (3) gedrückt wird.

13. Verfahren nach einem der Ansprüche 9 bis 12, wobei die wenigstens eine Stelle (19) durch Tiefziehen des Bodens (3) geformt wird.

14. Verfahren nach einem der Ansprüche 9 bis 13, wobei der blechförmige Werkstoff (21) nach dem Erzeugen der wenigstens einen plastisch verformten Stelle (19) im Boden (3) an wenigstens einem Randbereich (12, 14) umgekantet wird.

## Claims

1. Tray (1) for a storage lift, comprising a base (3) for holding stored goods, the base (3) being plastically deformed at at least one site (19) distanced from at least one edge region (12, **14),characterized in that** in an unloaded state (18), the base (3) is curved upward and the curved base (3) has, at the at least one plastically deformed site (19), an upward offset (27) having a height (39) which is at least 0.4 times and at most 0.7 times a thickness (41) of the base (3).

2. Tray (1) according to claim 1, **characterized in that** negative prestress is produced in the base (3) by means of the at least one plastically deformed site (19).

3. Tray (1) according to claim 1 or claim 2, **characterized in that** the at least one plastically deformed site (19) is formed by an elongate recess (23).

4. Tray (1) according to claim 3, **characterized in that** the tray (1) is substantially elongate, and a longitudinal direction (33) of the at least one elongate recess (23) runs substantially transversely to a longitudinal direction (L) of the tray (1).

5. Tray (1) according to claim 3 or claim 4, **characterized in that** the at least one elongate recess (23) has a length (35) which is greater than 1/3 of a tray depth (37).

6. Tray (1) according to any of claims 1 to 5, **characterized in that** the at least one offset (27) has a height (39) which corresponds at most to the thickness (41) of the base (3).

7. Tray (1) according to any of claims 1 to 6, **characterized in that** the tray (1) is formed as a stamped and bent part.

8. Tray (1) according to any of claims 1 to 7, **characterized in that** the at least one plastically deformed site (19) is formed monolithically with the base (3) of the tray (1).

9. Method for producing a tray (1) according to any of claims 1 to 8 from a sheet-like material (21) by reshaping, wherein a base (3) of the tray (1) is plastically deformed at at least one site (19) distanced from at least one edge region (12, 14).

10. Method according to claim 9, wherein an upwardly directed curvature (17) of the base (3) is produced by the at least one plastically deformed site (19).

11. Method according to claim 9 or claim 10, wherein at the at least one plastically deformed site (19), material of the base (3) is displaced away from the at least one deformed site (19).

12. Method according to any of claims 9 to 11, wherein at least one displacement body is pressed into the base (3) from below at the at least one site (19).

13. Method according to any of claims 9 to 12, wherein the at least one site (19) is shaped by deep drawing the base (3).

14. Method according to any of claims 9 to 13, wherein the sheet-like material (21) is folded over at least one edge region (12, 14) after the production of the at least one plastically deformed site (19) in the base (3).

## Revendications

1. Plateau (1) pour un ascenseur de stockage, comportant un fond (3) pour le dépôt de produits à stocker, dans lequel le fond (3) est déformé plastiquement en au moins un endroit (19) distant d'au moins une zone de bord (12, 14), **caractérisé en ce que** le fond (3) est bombé vers le haut dans un état non chargé (18) et le fond (3) bombé présente, en au moins un endroit (19) déformé plastiquement, un décalage (27) vers le haut d'une hauteur (39) qui est au moins 0,4 fois, et au plus 0,7 fois, une épaisseur (41) du fond (3).

2. Plateau (1) selon la revendication 1, **caractérisé en ce qu'**une précontrainte négative est générée dans le fond (3) par l'au moins un endroit (19) déformé plastiquement.

3. Plateau (1) selon la revendication 1 ou 2, **caractérisé en ce que** l'au moins un endroit (19) déformé plastiquement est formé par un évidement (23) allongé.

4. Plateau (1) selon la revendication 3, **caractérisé en ce que** le plateau (1) est sensiblement allongé et une direction longitudinale (33) de l'au moins un évidement (23) allongé est sensiblement transversale à une direction longitudinale (L) du plateau (1).

5. Plateau (1) selon la revendication 3 ou 4, **caractérisé en ce que** l'au moins un évidement (23) allongé présente une longueur (35) qui est supérieure à 1/3 d'une profondeur (37) de plateau.

6. Plateau (1) selon l'une des revendications 1 à 5, **caractérisé en ce que** l'au moins un décalage (27) présente une hauteur (39) au plus égale à l'épaisseur (41) du fond (3).

7. Plateau (1) selon l'une des revendications 1 à 6, **caractérisé en ce que** le plateau (1) est formé en tant que pièce estampée cintrée.

8. Plateau (1) selon l'une des revendications 1 à 7, **caractérisé en ce que** l'au moins un endroit (19) déformé plastiquement est formé de manière monolithique avec le fond (3) du plateau (1).

9. Procédé pour la fabrication, par formage, d'un plateau (1) en un matériau (21) en forme de tôle selon l'une des revendications 1 à 8, dans lequel un fond (3) du plateau (1) est déformé plastiquement en au moins un endroit (19) distant d'au moins une zone de bord (12, 14).

10. Procédé selon la revendication 9, dans lequel une courbure (17) du fond (3) orientée vers le haut est générée par l'au moins un endroit (19) déformé plastiquement.

11. Procédé selon la revendication 9 ou 10, dans lequel, à l'au moins un endroit (19) déformé plastiquement, le matériau du fond (3) est déplacé en s'éloignant de l'au moins un endroit (19) déformé.

12. Procédé selon l'une des revendications 9 à 11, dans lequel au moins un corps de déplacement est enfoncé par le bas dans le fond (3) au niveau de l'au moins un endroit (19).

13. Procédé selon l'une des revendications 9 à 12, dans lequel l'au moins un endroit (19) est formé par emboutissage du fond (3).

14. Procédé selon l'une des revendications 9 à 13, dans lequel le matériau (21) en forme de tôle est replié sur au moins une zone de bord (12, 14) après la génération de l'au moins un endroit (19) déformé plastiquement dans le fond (3).
